# FASCICULE DE BREVET EUROPEEN

(11) **EP 3 638 936 B1**
(45) Date de publication et mention de la délivrance du brevet: **07.04.2021**
(21) Numéro de dépôt: 18735675.3
(22) Date de dépôt: 12.06.2018
(51) Int. Cl.: F16K 31/122, F16K 15/02, F16K 17/04, F16K 27/02, F01M 1/08, F01M 1/16, F01P 3/08

(54) **GICLEUR DE FLUIDE AXIAL A CLAPET EVENTE**
AXIALE FLUIDSPRÜHDÜSE MIT ENTLÜFTUNGSVENTIL
AXIAL FLUID SPRAY NOZZLE WITH VENT VALVE

(30) Priorité: 13.06.2017 FR 1755313
(43) Date de publication de la demande: 22.04.2020
(73) Titulaire: Bontaz Centre R&D, 74460 Marnaz (FR)
(72) Inventeur: PEROTTO, Stéphane, Pascal, 74130 Ayse (FR); TALOTTI, Marc, Eugène, 74700 Sallanches (FR)
(74) Mandataire: Brevalex
(86) Numéro de dépôt international: PCT/FR2018/051363
(87) Numéro de publication internationale: WO 2018/229413

(56) Documents cités:
- EP-A1- 1 980 729
- EP-A1- 2 549 159
- WO-A1-2010/029085
- WO-A1-2014/167190
- DE-A1- 10 041 324
- FR-A1- 2 827 009
- US-A1- 2013 192 697

## Description

### DOMAINE TECHNIQUE

La présente invention concerne un système de distribution de fluide, notamment un gicleur d'huile axial à clapet éventé. Plus particulièrement, la présente invention concerne un gicleur d'huile axial à clapet éventé destiné à être mis en œuvre dans un circuit hydraulique ou pneumatique du domaine automobile, par exemple dans un circuit hydraulique d'un moteur à combustion interne, encore plus particulièrement pour le refroidissement des pistons du moteur à combustion interne.

### ART ANTÉRIEUR

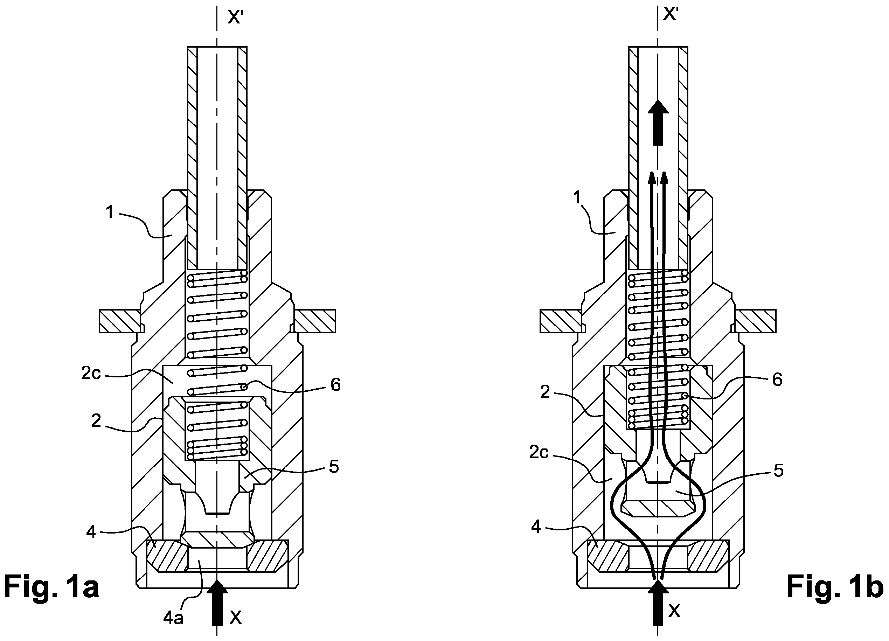

Les figures 1a et 1b représentent un gicleur d'huile axial connu de l'état de la technique et décrit dans le document FR 2827009.

Ce gicleur d'huile axial comprend :
- un corps de gicleur 1 comprenant un conduit interne 2, s'étendant selon un axe d'élongation XX', comprenant une première 2a et une seconde 2b extrémité, et ledit conduit 2 étant délimité par une surface interne 2c du corps de gicleur 1,
- un siège de clapet 4 disposé au niveau de la seconde extrémité 2b du conduit interne 2, et comprenant une lumière 4a formant une entrée d'huile du gicleur d'huile,
- un obturateur 5, logé dans le conduit interne 2 du corps de gicleur et repoussé contre la lumière du siège 4 de clapet par un ressort de compression 6 en appui contre une butée installée dans le conduit interne 2.

L'obturateur, par exemple un piston (tel que représenté aux figures la et 1b), est logé dans le conduit interne 2, et coopère avec le siège 4 de clapet. Notamment, l'obturateur est repoussé par le ressort de compression 6 de manière à obstruer la lumière du siège 4 de clapet dès lors que la pression d'huile est inférieure à une pression prédéterminée.

Le gicleur d'huile avec l'obturateur en position fermée est représenté à la figure la. L'obturateur repose alors sur le siège de manière à obstruer l'entrée du gicleur et ainsi interdire toute circulation d'huile.

Dès lors que la pression d'huile à l'entrée du gicleur est suffisante pour vaincre la force exercée par le ressort de compression sur l'obturateur, ce dernier est repoussé vers l'intérieur du gicleur, et libère alors l'entrée de ce dernier (tel que représenté à la figure 1b). Il en résulte un écoulement d'huile dans le gicleur de l'entrée vers la sortie, et symbolisé par les flèches sur la figure 1b.

Cependant, le gicleur d'huile axial connu de l'état de la technique n'est pas satisfaisant.

En effet, ce type de gicleur présente, en particulier, un comportement instable, et peu prévisible.

Notamment, lors de l'écoulement d'huile dans le conduit interne 2, une contre pression, opposée au sens dudit écoulement, s'exerce sur l'obturateur, de sorte que ce dernier a un comportement vibratoire préjudiciable à la durée de vie des éléments coopérant avec l'obturateur, en particulier le ressort de compression 6, le siège de clapet et le guide .

Cette contre pression induit également une ouverture progressive du clapet qui génère une perte de charge importante lors de l'écoulement du fluide. Cette perte de charge est néfaste aux performances du gicleur car elle en limite le débit.

Par ailleurs, selon cette configuration, le ressort de compression est directement sur le passage de l'écoulement d'huile, de sorte que ce dernier est traversé par l'huile lorsque le gicleur d'huile est ouvert.

Ce passage de l'huile dans le ressort perturbe son fonctionnement, nuit à sa réactivité mécanique , et peut le déformer ou l'entrainer en rotation, ce qui accélère également son usure.

Il existe également un autre type de gicleur d'huile, dit gicleur d'huile radial, dont le conduit interne présente une bifurcation brutale.

Un gicleur d'huile radial présente un encombrement radial important.

Par conséquent, dès lors que le gicleur d'huile doit présenter un encombrement radial réduit, la configuration radiale n'est pas utilisable.

Les documents WO2014/167190 et WO2010/029085 divulguent chacun un gicleur d'huile, le premier de ces deux documents divulguant un gicleur selon le préambule de la revendication 1.

Un but de la présente invention est de proposer un gicleur de fluide axial présentant une réactivité améliorée par rapport à un gicleur de fluide axial connu de l'état de la technique.

Un autre but de la présente invention est de proposer un gicleur de fluide axial pour lequel la perte de charge est réduite, et ainsi permettre des vitesses de jet de fluide plus importantes sous une même pression.

Un autre but de la présente invention est de proposer un gicleur de fluide axial à clapet plus stable et dont l'architecture permet de réduire, voire annihiler, le comportement vibratoire de l'obturateur.

Enfin, un dernier but de la présente invention est de proposer un gicleur de fluide axial à clapet susceptible de présenter un encombrement réduit.

### EXPOSÉ DE L'INVENTION

Les buts énoncés ci-dessus sont au moins en partie atteints par un gicleur de fluide axial à clapet éventé comprenant :
- un corps de gicleur comprenant un conduit interne, s'étendant selon un axe d'élongation XX', ledit conduit présentant une symétrie de révolution autour de l'axe d'élongation XX', comprenant une première et une seconde extrémité, et défini par une surface interne du corps de gicleur, la seconde extrémité formant une sortie de fluide,
- un siège de clapet disposé au niveau de la première extrémité du conduit interne, et comprend une lumière formant une entrée de fluide du gicleur,
- un guide de clapet comprenant une chemise tubulaire et un organe de maintien, la chemise formant un canal, ouvert selon une troisième extrémité , et obturé par un fond selon une quatrième extrémité, l'organe de maintien maintenant la chemise dans le conduit interne et coaxialement audit conduit, la troisième extrémité étant en regard et en retrait de la lumière du siège de clapet, la chemise laissant un espace entre sa surface périphérique et la surface interne du corps de gicleur de manière à permettre l'écoulement de fluide, selon un sens d'écoulement du fluide, entre l'entrée et la sortie de fluide,
- un obturateur monté en coulissement axial dans le canal de la chemise, l'obturateur étant repoussé contre la lumière du siège de clapet par un ressort de compression, logé dans la chemise et en butée contre le fond de la chemise, de manière à obstruer la lumière du siège de clapet,
le guide de clapet comprenant en outre un évent radial, qui comprend un canal d'évent isolé de manière étanche de l'écoulement de fluide et reliant l'intérieur de la chemise de guidage tubulaire, au niveau de la section de réserve, à un perçage radial traversant formé dans le corps de gicleur.

Selon un mode de réalisation, un espace circonférentiel est ménagé entre une surface tubulaire externe de l'organe de maintien et la surface interne du conduit interne, l'espace circonférentiel étant isolé de manière étanche de l'écoulement de fluide, et mettant en communication canal d'évent et le perçage radial traversant.

Selon un mode de réalisation, le lien mécanique entre le tronçon annulaire et la chemise comprend au moins un rayon s'étendant radialement entre la surface périphérique et une surface tubulaire interne du tronçon annulaire.

Selon un mode de réalisation, le coulissement axial de l'obturateur est limité par une butée de clapet à une section de coulissement de la chemise débouchant sur la troisième extrémité de la chemise, et adjacente à une section de réserve de la chemise se terminant par le fond de la chemise, le canal d'évent débouchant avantageusement dans le canal de la chemise au niveau de la section de réserve .

Selon un mode de réalisation, l'organe de maintien comprend un tronçon annulaire, lié mécaniquement à la chemise, et dans lequel la chemise est engagée coaxialement, l'engagement coaxial de la chemise dans le tronçon annulaire ménageant un espace d'écoulement entre lesdits tronçon et chemise, le tronçon annulaire comprenant une surface tubulaire externe comprenant au moins une section de surface circonférentielle en contact circonférentiel avec la surface interne du corps de gicleur.

Selon un mode de réalisation, le conduit interne comprend une première section de conduit tubulaire ayant une extrémité coïncidant avec la première extrémité et une autre extrémité au niveau de laquelle est disposée une butée, le tronçon annulaire étant logé dans la première section de conduit, et en butée contre ladite butée dans le sens d'écoulement du fluide.

Selon un mode de réalisation, l'agencement en butée du tronçon annulaire contre la butée est exécuté par un contact entre une extrémité supérieure du tronçon annulaire et la butée, ledit contact étant circonférentiel et étanche, le contact circonférentiel entre la section de surface circonférentielle et la surface interne du corps de gicleur étant également étanche, la butée étant avantageusement formée par un épaulement circonférentiel de la surface interne du corps de gicleur.

Selon un mode de réalisation, la section de surface circonférentielle s'étend à partir d'une extrémité inférieure du tronçon annulaire et parallèlement à l'axe d'élongation du corps de gicleur, et est limitée à une première fraction de la surface tubulaire externe, une seconde fraction de la surface tubulaire externe, adjacente à ladite première fraction, est à distance de la surface interne du corps de gicleur, la seconde fraction de la surface tubulaire externe et la portion de surface interne du corps de gicleur qui lui est en regard forment un espace circonférentiel isolé de manière étanche par la section de surface circonférentielle d'une part et par le contact circonférentiel étanche entre l'extrémité supérieure et la butée.

Selon un mode de réalisation, le canal d'évent de l'évent radial comprend un canal radial formé à partir de la section de réserve, traversant le volume du rayon de manière radiale, et débouchant au niveau de l'espace circonférentiel , et dans lequel le perçage radial traversant débouche également de la surface interne du corps de gicleur au niveau de l'espace circonférentiel.

Selon un mode de réalisation, la première section de conduit tubulaire comprend une section de rétrécissement s'étendant à partir de la butée, et en contact étanche circonférentiel avec une section de la seconde fraction de la surface tubulaire.

Selon un mode de réalisation, le guide de clapet est également pourvu d'ailettes de centrage s'étendant radialement à la surface périphérique de la chemise, et en contact avec la surface interne du corps de gicleur, les ailettes prolongeant avantageusement l'au moins un rayon.

Selon un mode de réalisation, les ailettes s'étendent au-delà de la troisième extrémité de la chemise et sont en appui contre le siège de manière à prévenir tout déplacement du guide de clapet selon l'axe d'élongation du corps de gicleur.

Selon un mode de réalisation, la butée de clapet est formée par un épaulement circonférentiel sur la surface interne de la chemise.

Selon un mode de réalisation, la section de coulissement de la chemise présente un diamètre supérieur à celui de la section de réserve de manière à former l'épaulement circonférentiel.

Selon un mode de réalisation, le positionnement de l'épaulement circonférentiel est ajusté de manière à empêcher au ressort de compression d'être à spires jointives lorsque que l'obturateur est en butée contre la butée de clapet.

Selon un mode de réalisation, le guide de clapet comprend un matériau thermoplastique.

Selon un mode de réalisation, le siège de clapet est serti au corps de gicleur.

Selon un mode de réalisation, l'obturateur est un piston qui présente une extrémité de piston, dite tête de piston, destinée à obstruer la lumière du siège de clapet de forme complémentaire à ladite lumière.

Selon un mode de réalisation, la tête de piston comprend un chanfrein.

Selon un mode de réalisation, l'obturateur est une bille.

Selon un mode de réalisation, le gicleur comprend en outre un tube de distribution de fluide assemblé sur le corps et maintenu sur celui-ci par frettage, par brasure, par soudure ou par sertissage au niveau de la sortie du gicleur de fluide.

L'invention concerne également un circuit hydraulique ou pneumatique comprenant au moins un gicleur de fluide, avantageusement le circuit hydraulique ou pneumatique étant celui d'un moteur à combustion interne.

### BRÈVE DESCRIPTION DES DESSINS

La présente invention sera mieux comprise sur la base de la description qui va suivre et des dessins en annexe sur lesquels :
- la figure la est une représentation schématique, selon un plan de coupe longitudinal, d'un gicleur d'huile axial à clapet connu de l'état de la technique, le clapet étant en position fermée ;
- la figure 1b est une représentation schématique, selon un plan de coupe longitudinal, d'un gicleur d'huile axial à clapet, identique à celui de la figure 1a, connu de l'état de la technique, le clapet étant en position ouverte, les flèches schématisant la circulation d'huile ;
- la figure 2 est une représentation schématique en perspective éclatée d'un gicleur d'huile axial à clapet selon un mode de représentation de la présente invention ;
- la figure 3 est une représentation schématique selon un plan de coupe longitudinal (parallèle à l'axe d'élongation XX') du gicleur d'huile axial à clapet, selon un mode de réalisation la présente invention, le clapet étant en position ouverte, et les flèches schématisent l'écoulement d'huile dans ledit gicleur ;
- la figure 4 est une représentation schématique selon un plan de coupe longitudinal (parallèle à l'axe d'élongation XX') du corps de gicleur selon un mode de réalisation particulier de la présente invention ;
- la figure 5a est une représentation en perspective d'un siège de clapet susceptible d'être mis en œuvre dans le gicleur d'huile de la présente invention ;
- la figure 5b est une représentation schématique selon un plan de coupe diamétral du siège de clapet ;
- la figure 6a est une vue en perspective, vue de dessous, d'un guide de clapet susceptible d'être mis en œuvre dans le gicleur d'huile de la présente invention ;
- la figure 6b est une représentation schématique, du guide de clapet de la figure 6a, en plan de coupe selon l'axe XX' ;
- la figure 6c est une vue en perspective, vue de dessus, du guide de clapet de la figure 6a.

### EXPOSÉ DÉTAILLÉ DE MODES DE RÉALISATION PARTICULIERS

L'invention décrite de manière détaillée ci-dessous met en œuvre un gicleur d'huile axial comprenant un clapet éventé de manière radiale.

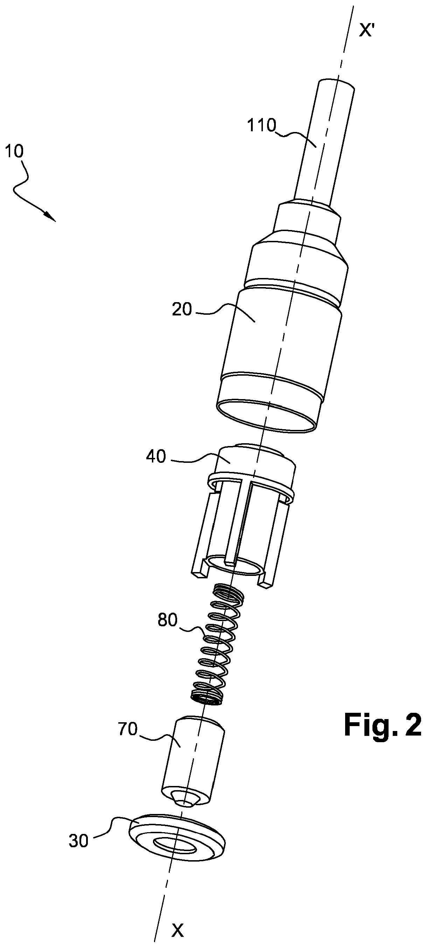

Sur les figures 2 à 6c, on peut voir un exemple de réalisation d'un gicleur d'huile 10 axial à clapet éventé selon la présente invention. Ce type de gicleur est particulièrement adapté au refroidissement d'un piston ou au graissage d'une chaine de moteur à combustion interne.

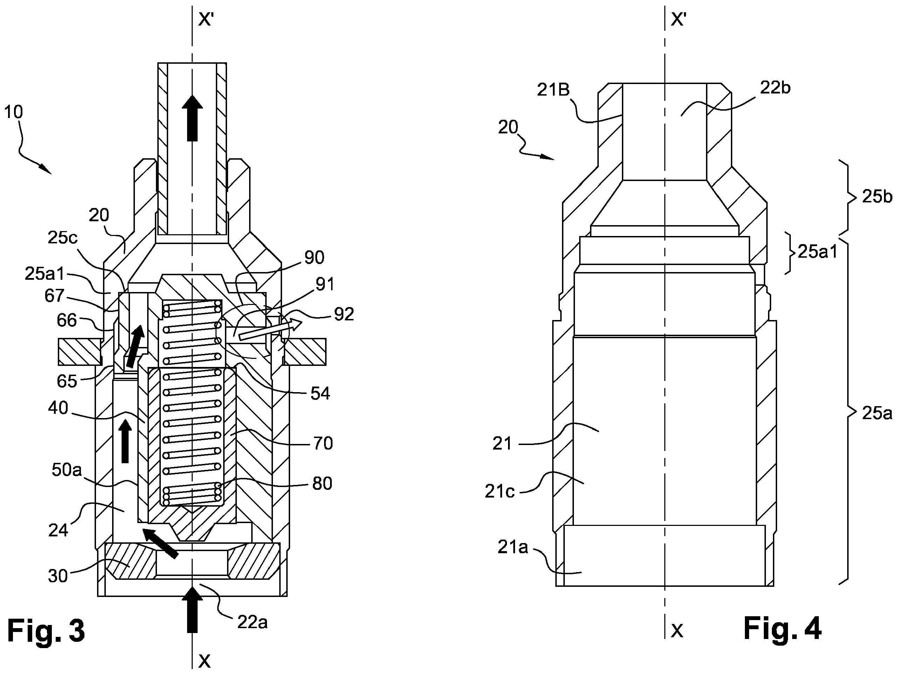

Sur les figures 2 à 4, on peut voir un corps de gicleur 20 qui comprend un conduit interne 21 (figure 4).

Le conduit interne 21 s'étend selon un axe d'élongation XX', et présente une symétrie de révolution autour dudit axe d'élongation XX'. Le conduit interne 21 comprend en outre une première extrémité 21a et une seconde extrémité 21b, et est défini par une surface interne 21c du corps de gicleur 20, la seconde extrémité 21a formant une sortie d'huile 22b.

Tout au long de l'exposé, un organe ou une section présentant une symétrie de révolution autour de l'axe d'élongation XX' peut présenter un diamètre variable. Autrement dit, le conduit interne 21 peut présenter des sections de diamètres différents.

Le corps de gicleur peut préférentiellement être fait d'un matériau susceptible de résister aux contraintes imposées par le fonctionnement d'un moteur à combustion interne. Le corps de gicleur peut être fait d'un matériau métallique.

Par exemple, le corps de gicleur peut comprendre au moins un des matériaux choisi parmi : acier , alliage d'aluminium, alliage cuivreux , un matériau thermoplastique.

Le gicleur d'huile 10 comprend également un siège de clapet 30 (figures 2, 3, 5a et 5b) disposé au niveau de la première extrémité 21a du conduit interne 21.

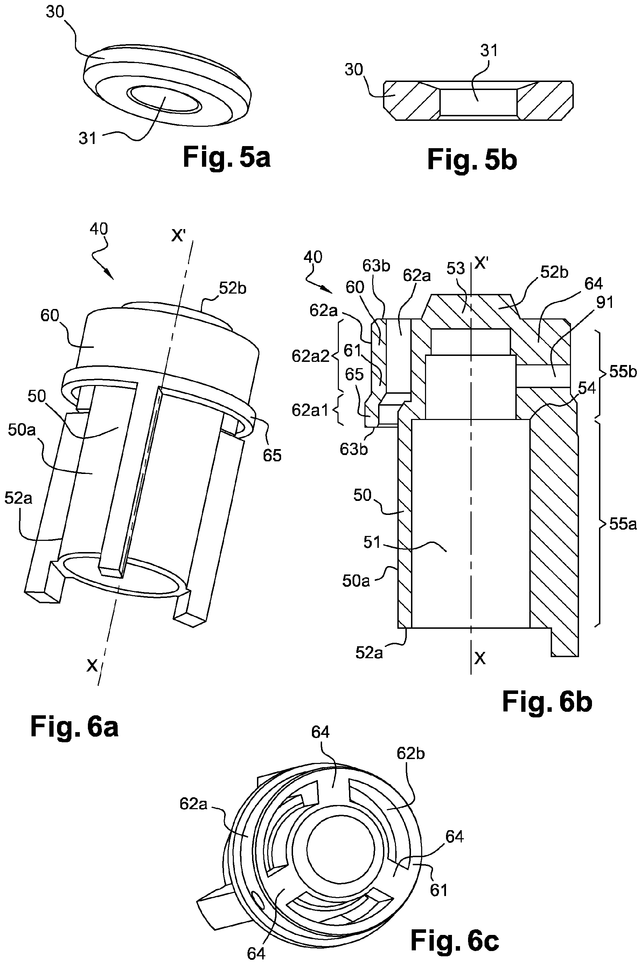

Le siège de clapet 30 comprend une lumière 31 (figures 5a et 5b) formant une entrée d'huile 22a du gicleur d'huile10.

Sans qu'il soit nécessaire de le préciser, le siège de clapet 30 présente généralement la forme d'un disque dont le contour est susceptible d'être inséré, en ajustement, dans le conduit interne 21 du corps de gicleur20.

Par ailleurs, on entend par lumière 31 un perçage traversant ménagé dans le siège de clapet 30, et présentant généralement une symétrie de révolution autour de l'axe d'élongation XX' du corps de gicleur.

Le siège de clapet 30 peut comprendre au moins un des matériaux choisi parmi : acier, alliage d'aluminium, alliage cuivreux, matériau thermoplastique.

Le siège de clapet 30 peut être serti au corps de gicleur 10.

Le gicleur d'huile 10 comprend également un guide de clapet 40.

Le guide clapet 40 (figure 2, 3, 6a à 6c) comprend une chemise tubulaire 50 et un organe de maintien 60 (figure 3, 6a et 6b).

La chemise tubulaire 50 forme un canal 51, ouvert selon une troisième extrémité 52a, et obturé par un fond 53 selon une quatrième extrémité 52b (figure 6b).

L'organe de maintien 60 est adapté pour maintenir la chemise tubulaire 50 dans le conduit interne 21, et coaxialement audit conduit 21.

Autrement dit, l'organe de maintien 60 permet le maintien et le centrage de la chemise tubulaire 50 dans le conduit interne 21.

Par ailleurs, la chemise tubulaire 50 maintenue dans le conduit interne 21 laisse un espace 24 entre sa surface périphérique 50a et la surface interne 21 du corps de gicleur10 de manière à permettre l'écoulement de fluide entre l'entrée et la sortie d'huile (figure 3).

En outre, le maintien de la chemise tubulaire 50 par l'organe de maintien 60 est agencé pour mettre la troisième extrémité 52a de la chemise tubulaire 50 en regard et en retrait de la lumière 31 du siège de clapet 30.

Sans qu'il soit nécessaire de le préciser, l'organe de maintien 60 prévoit également un passage du fluide, par exemple l'organe de maintien est ajouré.

Tel qu'illustré aux figures 2 et 3, le gicleur d'huile 10 comprend également un obturateur 70 monté en coulissement axial dans le canal 51 de la chemise tubulaire 50.

Par coulissement axial, on entend un obturateur 70 monté en ajustement glissant dans le canal 51 de la chemise tubulaire 50. L'ajustement glissant est étanche, et peut être de quelques centièmes de millimètre.

Par ailleurs, le coulissement axial de l'obturateur 70 dans le canal 51 de la chemise tubulaire 50 peut être limité par une butée de clapet 54 à une section de coulissement 55a (figure 6b) de la chemise tubulaire 50, débouchant sur la troisième extrémité 52a de la chemise tubulaire 50.

La section de coulissement 55a est adjacente à une section de réserve 55b de la chemise tubulaire 50 qui se termine par le fond 53 de la chemise tubulaire 50 (figure 6b).

En outre, un ressort de compression 80 est logé dans le canal 51 de la chemise tubulaire 50.

Le ressort de compression 80 est en appui contre le fond 53 de la chemise tubulaire 50, et repousse l'obturateur 70 contre la lumière 31 du siège de clapet 30 de manière à obstruer ladite lumière 31 (figure 2 et 3).

En fonctionnement, l'écoulement d'huile dans l'espace 24 du gicleur 10, est amorcé dès lors que la pression d'huile à l'entrée 22a du gicleur 10 a atteint une pression d'huile prédéterminée.

La pression d'huile prédéterminée est la pression permettant de vaincre la force exercée par le ressort de compression 80 sur l'obturateur 70, de manière à faire coulisser ce dernier dans le canal 51 de la chemise tubulaire 50, et ainsi libérer la lumière 31 du siège de clapet 30.

De manière avantageuse, la butée de clapet 54 est formée par un épaulement circonférentiel 54 sur la surface interne de la chemise tubulaire 50 (figure 3 et figure 6b).

De manière particulièrement avantageuse, la section de coulissement 55a de la chemise tubulaire 50 peut présenter un diamètre interne supérieur à celui de la section de réserve 55b de manière à former l'épaulement circonférentiel 54.

Toujours de manière avantageuse, le positionnement de l'épaulement circonférentiel peut être ajusté de manière à empêcher au ressort de compression d'être à spires jointives lorsque que l'obturateur 70 est en butée contre la butée de clapet 54.

Le guide de clapet 40 peut comprendre un matériau thermoplastique, et est avantageusement formé par injection plastique.

L'obturateur 70 peut être un piston qui présente une extrémité de piston, dite tête de piston, et qui est destinée à obstruer la lumière du siège de clapet de forme complémentaire à ladite lumière.

De manière alternative, l'obturateur 70 peut être une bille.

Le guide de clapet 40 comprend en outre un évent radial 90, qui comprend un canal d'évent 91 reliant, de manière étanche, l'intérieur de la chemise tubulaire 50, au niveau de la section de réserve 55b, à un perçage radial traversant 92 formé dans le corps de gicleur 10 (figure 3). Le canal d'évent 91 peut comprendre un tuyau reliant l'intérieur de la chemise tubulaire au perçage radial 92.

Par « reliant de manière étanche », on entend que l'huile s'écoulant dans l'espace 24 ne peut entrer ni dans la section de réserve 55b, ni dans l'évent radial 90.

Un espace circonférentiel 66 peut être est ménagé entre une surface tubulaire externe 62a de l'organe de maintien 60 et la surface interne du conduit interne 21, l'espace circonférentiel 66 étant isolé de manière étanche de l'écoulement de fluide, et mettant en communication canal d'évent 91 et le perçage radial traversant 92.

Selon cette configuration, le ressort de compression 80, qui se trouve dans le volume de la chemise tubulaire, est alors isolé de manière étanche de l'écoulement d'huile. Le fonctionnement du ressort de compression 80 n'est alors pas perturbé par l'écoulement d'huile, ce qui permet d'obtenir une meilleure qualité de jet d'huile au niveau de la sortie d'huile 22b.

Par ailleurs, cet isolement du ressort de compression 80 de l'écoulement d'huile permet de limiter son usure.

En outre, l'évent radial 90 rend le ressort de compression 80 beaucoup plus stable, de sorte que le mécanisme d'ouverture du gicleur d'huile est plus prévisible que dans un gicleur d'huile dépourvu d'évent.

Enfin, l'obturateur 70, selon la présente invention, ne subit aucune contre pression de la part de l'écoulement d'huile de sorte que son comportement est à la fois stable et prévisible ainsi que plus rapide lors des montées en pression . L'absence de comportement vibratoire de l'obturateur 70 lorsque celui-ci est en contact contre la butée 54 permet également de limiter l'usure du ressort de compression 80 et du clapet en général.

**Selon un agencement particulier,** le conduit interne 21 peut comprendre une première section de conduit 25a tubulaire comprenant une extrémité coïncidant avec la première extrémité 21a et une autre extrémité au niveau de laquelle est disposée une butée 25c.

Le conduit interne 21 peut également comprendre une seconde section de conduit 25b de forme tronconique (figure 4) adjacente à la première section de conduit 25a au niveau de la butée 25c.

Par section de conduit tubulaire ou surface tubulaire, on entend de section présentant une symétrie de révolution autour de l'axe d'élongation XX'.

Par section de forme tronconique, on entend une section d'un tronc de cône. Par ailleurs, au sens de la présente invention, la base de la section tronconique peut être prolongée par une portion de cylindre dont le diamètre est égal à celui de ladite base. Aussi, la suite de la description sera limitée à une section tronconique comprenant une base, étant entendu que le terme base comprend aussi bien la base d'un cône qu'une base prolongée par une portion de cylindre tel que défini ci-avant.

La seconde section de forme tronconique 25b peut présenter une base de diamètre inférieur au diamètre de la première section de conduit 25a tubulaire de manière à former un épaulement circonférentiel sur la surface interne 21 du corps de gicleur 10, l'épaulement circonférentiel formant la butée 25c.

Toujours selon cet agencement particulier, le perçage 92 radial traversant peut être formé au travers de la paroi de la première section de conduit 25a tubulaire.

L'organe de maintien 60 peut comprendre un tronçon annulaire 61, lié mécaniquement à la chemise 50, et dans lequel la chemise 50 est engagée coaxialement. L'engagement coaxial de la chemise 50 dans le tronçon annulaire 61 est adapté pour ménager un espace d'écoulement entre lesdits tronçon 61 et chemise 50.

Le tronçon annulaire 61 peut comprendre une surface tubulaire externe 62a comprenant au moins une section de surface circonférentielle 65 en contact circonférentiel avec la surface interne du corps de gicleur 20.

En particulier, l'organe de maintien 60 peut comprendre deux surfaces tubulaires, la surface tubulaire externe 62a et une surface tubulaire interne 62b coaxiales et reliées selon une extrémité supérieure par une surface supérieure 63a et selon une extrémité inférieure par une surface inférieure 63b (figures 6b et 6c). L'extrémité supérieure 63a est avantageusement en butée contre la butée 25c, selon le sens d'écoulement de l'huile.

On entend par sens d'écoulement d'huile, l'écoulement de l'huile de l'entrée vers la sortie du gicleur d'huile.

Le diamètre de la surface tubulaire interne 62b est ajusté pour maintenir ladite surface tubulaire interne 62b à distance de la surface périphérique 50a de la chemise tubulaire 60. Autrement dit le tronçon annulaire 61 de l'organe de maintien n'obstrue pas le passage d'huile 24.

Le tronçon annulaire 61 peut entourer la chemise tubulaire 50 au niveau de sa section de réserve 55b.

Il est notable que le tronçon annulaire 61 réduit l'espace dans lequel s'écoule l'huile. Afin de compenser cet effet, la section de réserve 55b peut présenter un diamètre externe réduit par rapport à celui de la section de coulissement 55a. Autrement dit, la surface périphérique 50a de la chemise tubulaire 50 présente deux sections de surface périphérique adjacentes et de diamètres différents. La première des deux sections, dite première section de surface périphérique, s'étend à partir de la troisième extrémité 52a, et la seconde, dite seconde section de surface périphérique et présentant un diamètre intérieur à celui de la première section de surface périphérique, se termine par la quatrième extrémité 52b. Ainsi, la surface tubulaire interne 62b est en regard et à distance de la seconde section de surface périphérique.

Par ailleurs, le tronçon annulaire 61 est mécaniquement lié à la chemise tubulaire 50 au moyen d'au moins un rayon 64, exemple deux rayons 64, ou encore trois rayons 64 (figure 6b et 6c).

Le rayon 64 s'étend de manière radiale entre la surface périphérique 50a de la chemise tubulaire 50 et la surface tubulaire interne 62b. En particulier, le rayon 64 connecte mécaniquement, de manière radiale, la surface périphérique de la section de réserve 55b à la surface tubulaire interne 62a.

Par ailleurs, la surface supérieure 63a est en contact circonférentiel étanche contre l'épaulement 25c de la surface interne 21.

La surface tubulaire externe 62a peut comprendre au moins une section de surface circonférentielle 65 en contact circonférentiel avec la surface interne du corps de gicleur 20. En particulier, le contact circonférentiel peut être étanche.

La section de surface circonférentielle 65 peut s'étendre à partir de l'extrémité inférieure du tronçon annulaire 61, et parallèlement à l'axe d'élongation XX' du corps de gicleur 10. La section de surface circonférentielle 65 s'étend, par ailleurs, selon une première fraction 62a1 de la surface tubulaire externe 62a (figure 6a et 6b).

La surface tubulaire externe 62a comprend également une seconde fraction 62a2 de la surface tubulaire externe 62a, adjacente à ladite première fraction 62a1, qui est à distance la surface interne 21 du corps de gicleur 10.

Ainsi, la seconde fraction 62a2 de la surface tubulaire externe 62a et la portion de surface interne du corps de gicleur qui lui est en regard forment un espace circonférentiel 66 isolé de manière étanche par la section de surface circonférentielle 65 d'une part, et par le contact étanche entre la surface supérieure 63a et l'épaulement 25c de la surface interne 21 d'autre part (figure 3).

Par « isolé de manière étanche », on entend isolé de l'écoulement d'huile et de la pression que celui-ci pourrait générer.

La canal d'évent 91 radial ainsi que le perçage 92 débouchent avantageusement au niveau de l'espace circonférentiel 66. Cette configuration est particulièrement avantageuse, car elle permet de relâcher les contraintes d'alignement et/ou d'ajustement du canal d'évent radial 91 par rapport au perçage 92. Le procédé de fabrication des éléments constitutifs du corps de gicleur ainsi que leur assemblage s'en trouvent alors simplifiés.

A titre d'exemple non limitatif et très avantageux, le canal d'évent 91 radial peut comprendre un canal radial formé à partir de la section de réserve 55b, dans traversant de manière radiale le volume du rayon 64, et débouchant au niveau de l'espace circonférentiel 66 (figure 3 et 6b).

Autrement dit le canal d'évent est isolé de manière étanche de l'écoulement d'huile dans le gicleur d'huile.

La première section de conduit 25a comprend une section de rétrécissement 25a1 qui s'étend à partir de l'épaulement 25c et parallèlement à l'axe d'élongation XX'. La section de rétrécissement 25a1 est, par ailleurs, en contact étanche circonférentiel avec une section 67 de la seconde fraction 62a2 de la surface tubulaire externe 62a, la section 67 s'étendant à partir de l'extrémité supérieure 63a et parallèlement à l'axe d'élongation du corps de gicleur 10 (figure 3).

Il est également entendu que l'étendue de la section de rétrécissement 25a1 est ajustée de manière à conserver l'espace circonférentiel 66. Autrement dit, il n'y a pas de contact entre la section de surface circonférentielle 65 et la section de rétrécissement 25a1.

Le guide de clapet 40 peut avantageusement être pourvu d'ailettes de centrage 100 s'étendant radialement à la surface périphérique 50a de la chemise tubulaire 50, et en contact avec la surface interne 21 du corps de gicleur 10.

L'étendue des ailettes de centrage 100 est ajustée de manière à parfaire le maintien de manière coaxiale de la chemise tubulaire 50 dans le corps de gicleur 20 (figure 3, 6a et 6b).

De manière avantageuse, les ailettes de centrage 100 prolongent avantageusement chacune un rayon parmi l'au moins un rayon 64, et l'espace en deux ailettes de centrage 100 délimite un canal d'écoulement.

De manière avantageuse, les ailettes de centrage 100 sont également en appui contre le siège de clapet 30 de manière à prévenir tout déplacement du guide de clapet selon l'axe d'élongation du corps de gicleur.

Cet appui des ailettes de centrage 100 est obtenu en prolongeant lesdites ailettes 100 au-delà de la troisième extrémité 52a.

Plus particulièrement, l'appui des ailettes de centrage 100 contre le siège de clapet 30 est adapté pour ne pas obstruer la lumière 31.

L'appui des ailettes de centrage 100 contre le siège de clapet permet de prévenir tout mouvement du guide de clapet 40 selon l'axe d'élongation XX'.

Le gicleur peut, en outre, comprendre un tube de distribution d'huile assemblé sur le corps et maintenu sur celui-ci par frettage, par brasure, par soudure ou par sertissage au niveau de la sortie du gicleur d'huile.

En fonctionnement, l'ouverture du gicleur d'huile est provoqué par le déplacement de l'obturateur 70 selon l'axe d'élongation XX' sous l'action d'une pression d'huile au niveau de l'entrée d'huile.

Lors de son déplacement, l'obturateur 70 comprime le ressort de compression 80 et réduit l'espace dans lequel il se trouve. L'évent radial 90 prévient l'établissement d'une surpression dans ce volume susceptible de perturber le fonctionnement du ressort. Le déplacement de l'obturateur est alors plus réactif, et le dispositif selon cet agencement permet une montée rapide du débit d'huile.

L'invention concerne également un gicleur d'huile axial à clapet éventé destiné à être mis en œuvre dans un circuit hydraulique ou pneumatique, par exemple du domaine automobile, comprenant au moins un gicleur à clapet éventé tel que décrit ci-avant.

Par exemple, le gicleur d'huile à clapet éventé peut être mis en œuvre dans le circuit hydraulique d'un moteur à combustion interne, en particulier pour le refroidissement des pistons du moteur à combustion interne.

Le gicleur selon la présente invention peut également être mis en œuvre pour le refroidissement par jet d'air, par exemple dans un système de climatisation.

## Revendications

1. Gicleur (10) axial à clapet éventé comprenant :
- un corps de gicleur (20) comprenant un conduit interne (21), s'étendant selon un axe d'élongation (XX'), ledit conduit (21) présentant une symétrie de 5 révolution autour de l'axe d'élongation (XX'), comprenant une première (21a) et une seconde extrémité (21b), et étant défini par une surface interne du corps de gicleur (20),
- un siège de clapet (30) disposé au niveau de la première extrémité (21a) du conduit interne (21), et comprenant une lumière (31) formant une entrée de fluide (22a) du gicleur,
- un guide de clapet (40) comprenant une chemise (50) tubulaire et un organe de maintien (60), la chemise (50) formant un canal (51), ouvert selon une troisième extrémité (52a), et obturé par un fond (53) selon une quatrième extrémité (52b), l'organe de maintien (60) maintenant la chemise (50) dans le conduit interne (21) et coaxialement audit conduit, la troisième extrémité (52a) étant en regard et en retrait de la lumière (31) du siège de clapet (30), la chemise (50) laissant un espace (24) entre sa surface périphérique (50a) et la surface interne du corps de gicleur (20) de manière à permettre l'écoulement de fluide, selon un sens d'écoulement du fluide, entre l'entrée et une sortie de fluide (22b),
- un obturateur (70) monté en coulissement axial dans le canal (51) de la chemise (50), l'obturateur (70) étant repoussé contre la lumière (31) du siège de clapet (30) par un ressort de compression (80), logé dans la chemise (50) et en butée contre le fond (53) de la chemise (50), de manière à obstruer la lumière (31) du siège de clapet (30), **caractérisé en ce que** la seconde extrémité (21b) du conduit interne (21) forme la sortie de fluide (22b) et **en ce que** le guide de clapet (4) comprend un évent radial (90), qui comprend un canal d'évent (91) isolé de manière étanche de l'écoulement de fluide et reliant l'intérieur de la chemise (50) de guidage tubulaire, au niveau de la section de réserve (55b), à un perçage (92) radial traversant formé dans le corps de gicleur (20).

2. Gicleur selon la revendication 1, dans lequel un espace circonférentiel (66) est ménagé entre une surface tubulaire externe (62a) de l'organe de maintien (60) et la surface interne du conduit interne (21), l'espace circonférentiel (66) étant isolé de manière étanche de l'écoulement de fluide, et mettant en communication canal d'évent (91) et le perçage radial traversant (92).

3. Gicleur selon l'une des revendications 1 à 2, dans lequel le coulissement axial de l'obturateur (70) est limité par une butée de clapet (54) à une section de coulissement (55a) de la chemise (50) débouchant sur la troisième extrémité (52a) de la chemise (50), et adjacente à une section de réserve (55b) de la chemise (50) se terminant par le fond (53) de la chemise (50), le canal d'évent (91) débouchant avantageusement dans le canal (51) de la chemise (50) au niveau de la section de réserve (55b).

4. Gicleur selon l'une des revendications 1 à 3, en combinaison avec la revendication 2, dans lequel l'organe de maintien (60) comprend un tronçon annulaire (61), lié mécaniquement à la chemise (50), et dans lequel la chemise (50) est engagée coaxialement, l'engagement coaxial de la chemise (50) dans le tronçon annulaire (61) ménageant un espace d'écoulement entre lesdits tronçon (61) et chemise (50), la surface tubulaire externe (62a) comprenant au moins une section de surface circonférentielle (65) en contact circonférentiel avec la surface interne du corps de gicleur (20).

5. Gicleur selon la revendication 4, dans lequel le lien mécanique entre le tronçon annulaire (61) et la chemise (50) comprend au moins un rayon (64) s'étendant radialement entre la surface périphérique (50a) et une surface tubulaire interne (62b) du tronçon annulaire (61).

6. Gicleur selon la revendication 5, dans lequel, le conduit interne (21) comprend une première section de conduit (25a) tubulaire comprenant une extrémité coïncidant avec la première extrémité (21a) du conduit interne et une autre extrémité au niveau de laquelle est disposée une butée (25c), le tronçon annulaire (61) étant logé dans la première section de conduit (25a), et en butée contre ladite butée (25c) dans le sens d'écoulement du fluide.

7. Gicleur selon la revendication 6, dans lequel l'agencement du tronçon annulaire (61) contre la butée (25c) est exécuté par un contact entre une extrémité supérieure (63a) du tronçon annulaire (61) et la butée (25c), ledit contact étant circonférentiel et étanche, le contact circonférentiel entre la section de surface circonférentielle et la surface interne du corps de gicleur (20) étant également étanche, la butée (25c) étant avantageusement formée par un épaulement circonférentiel de la surface interne du corps de gicleur (20).

8. Gicleur selon la revendication 7, dans lequel la section de surface circonférentielle (65) s'étend à partir d'une extrémité inférieure du tronçon annulaire (61) et parallèlement à l'axe d'élongation du corps de gicleur (20), et est limitée à une première fraction (62a1) de la surface tubulaire externe (62a), une seconde fraction (62a2) de la surface tubulaire externe (62a), adjacente à ladite première fraction (62a1), est à distance de la surface interne du corps de gicleur (20), la seconde fraction (62a2) de la surface tubulaire externe (62a) et la portion de surface interne du corps de gicleur (20) qui lui est en regard forment l'espace circonférentiel (66) isolé de manière étanche par la section de surface circonférentielle (65) d'une part et par le contact circonférentiel étanche entre l'extrémité supérieure (63a) et la butée (25c)

9. Gicleur selon la revendication 8, dans lequel le canal d'évent (91) de l'évent radial (90) comprend un canal radial formé à partir de la section de réserve (55b), traversant le volume du rayon (64) de manière radiale, et débouchant au niveau de l'espace circonférentiel (66), et dans lequel le perçage (92) radial traversant débouche également de la surface interne du corps de gicleur (20) au niveau de l'espace circonférentiel (66).

10. Gicleur selon la revendication 9, dans lequel la première section de conduit (25a) tubulaire comprend une section de rétrécissement (25a1) s'étendant à partir de la butée (25c), et en contact étanche circonférentiel avec une section de la seconde fraction (62a2) de la surface tubulaire.

11. Gicleur selon la revendications 9 ou 10, dans lequel le guide de clapet (40) est également pourvu d'ailettes de centrage (100) s'étendant radialement à la surface périphérique (50a) de la chemise (50), et en contact avec la surface interne du corps de gicleur (20), les ailettes prolongeant avantageusement l'au moins un rayon (64).

12. Gicleur selon la revendication 11, dans lequel les ailettes s'étendent au-delà de la troisième extrémité (52a) de la chemise et sont en appui contre le siège de manière à prévenir tout déplacement du guide de clapet (40) selon l'axe d'élongation du corps de gicleur (20).

13. Gicleur selon l'une des revendications 1 à 12 et en combinaison avec la revendication 2, dans lequel la butée de clapet (54) est formée par un épaulement circonférentiel sur la surface interne de la chemise (50).

14. Gicleur selon la revendication 13, dans lequel la section de coulissement (55a) de la chemise (50) présente un diamètre supérieur à celui de la section de réserve (55b) de manière à former l'épaulement circonférentiel.

15. Gicleur selon la revendication 13 ou 14, dans lequel le positionnement de l'épaulement circonférentiel est ajusté de manière à empêcher au ressort de compression (80) d'être à spires jointives lorsque que l'obturateur (70) est en butée contre la butée de clapet (54).

16. Gicleur selon l'une des revendications 1 à 15, dans lequel le guide de clapet (40) comprend un matériau thermoplastique.

17. Gicleur selon l'une des revendications 1 à 16, dans lequel le siège de clapet (30) est serti au corps de gicleur (20).

18. Gicleur selon l'une des revendications 1 à 17, dans lequel l'obturateur (70) est un piston qui présente une extrémité de piston, dite tête de piston, destinée à obstruer la lumière (31) du siège de clapet (30) de forme complémentaire à ladite lumière (31), avantageusement la tête de piston comprend un chanfrein.

19. Circuit hydraulique ou pneumatique comprenant au moins un gicleur (10) selon l'une des revendications 1 à 18, avantageusement le circuit hydraulique ou pneumatique étant celui d'un moteur à combustion interne.

## Patentansprüche

1. Axiale Düse (10) mit Lüftungsventil umfassend:
- einen Düsenkörper (20), der eine Innenleitung (21) umfasst, der sich entlang einer Ausdehnungsachse (XX') erstreckt, wobei die Leitung (21) eine Drehsymmetrie um die Ausdehnungsachse (XX') aufweist, ein erstes (21a) und ein zweites Ende (21b) umfasst und von einer Innenfläche des Düsenkörpers (20) definiert ist,
- einen Ventilsitz (30), der am ersten Ende (21a) der Innenleitung (21) angeordnet ist und eine Öffnung (31) umfasst, die einen Fluideinlass (22a) der Düse bildet,
- eine Ventilführung (40), die eine röhrenförmige Hülse (50) und ein Halteelement (60) umfasst, wobei die Hülse (50) einen Kanal (51) bildet, der an einem dritten Ende (52a) offen ist und von einem Boden (53) an einem vierten Ende (52b) verschlossen ist, wobei das Halteelement (60) die Hülse (50) in der Innenleitung (21) und koaxial zur Leitung hält, wobei sich das dritte Ende (52a) gegenüber der Öffnung (31) des Ventilsitzes (30) befindet und von dieser abgesetzt ist, wobei die Hülse (50) einen Raum (24) zwischen ihrer Umfangsfläche (50a) und der Innenfläche des Düsenkörpers (20) lässt, um die Strömung von Fluid in einer Strömungsrichtung des Fluids zwischen dem Einlass und einem Auslass von Fluid (22b) zu gestatten,
- einen Verschluss (70), der im Kanal (51) der Hülse (50) axial gleitend gelagert ist, wobei der Verschluss (70) von einer Druckfeder (80), die in der Hülse (50) und in Anschlag gegen den Boden (53) der Hülse (50) aufgenommen ist, so gegen die Öffnung (31) des Ventilsitzes (30) zurückgedrückt ist, dass er die Öffnung (31) des Ventilsitzes (30) verschließt, **dadurch gekennzeichnet, dass** das zweite Ende (21b) der Innenleitung (21) den Fluidauslass (22b) bildet, und dadurch, dass die Ventilführung (4) eine radiale Lüftung (90) umfasst, die einen Lüftungskanal (91) umfasst, der in dichter Weise von der Fluidströmung isoliert ist und das Innere der röhrenförmigen Führungshülse (50) am Reserveabschnitt (55b) mit einer radialen Durchgangsbohrung (92) verbindet, die im Düsenkörper (20) ausgebildet ist.

2. Düse nach Anspruch 1, wobei ein umlaufender Raum (66) zwischen einer röhrenförmigen Außenfläche (62a) des Halteelements (60) und der Innenfläche der Innenleitung (21) angeordnet ist, wobei der umlaufende Raum (66) in dichter Weise von der Fluidströmung isoliert ist und den Lüftungskanal (91) und die radiale Durchgangsbohrung (92) in Verbindung bringt.

3. Düse nach einem der Ansprüche 1 bis 2, wobei das axiale Gleiten des Verschlusses (70) von einem Ventilanschlag (54) auf einen Gleitabschnitt (55a) der Hülse (50) begrenzt ist, der im dritten Ende (52a) der Hülse (50) mündet und an einen Reserveabschnitt (55b) der Hülse (50) angrenzt, der mit dem Boden (53) der Hülse (50) endet, wobei der Lüftungskanal (91) vorteilhafterweise im Kanal (51) der Hülse (50) am Reserveabschnitt (55b) mündet.

4. Düse nach einem der Ansprüche 1 bis 3 in Kombination mit Anspruch 2, wobei das Halteelement (60) ein ringförmiges Teilstück (61) umfasst, das mechanisch mit der Hülse (50) verbunden ist und mit dem die Hülse (50) koaxial in Eingriff steht, wobei der koaxiale Eingriff der Hülse (50) mit dem ringförmigen Teilstück (61) einen Strömungsraum zwischen dem Teilstück (61) und der Hülse (50) schafft, wobei die röhrenförmige Außenfläche (62a) mindestens einen umlaufenden Flächenabschnitt (65) in umlaufendem Kontakt mit der Innenfläche des Düsenkörpers (20) umfasst.

5. Düse nach Anspruch 4, wobei die mechanische Verbindung zwischen dem ringförmigen Teilstück (61) und der Hülse (50) mindestens eine Speiche (64) umfasst, die sich radial zwischen der Umfangsfläche (50a) und einer röhrenförmigen Innenfläche (62b) des ringförmigen Teilstücks (61) erstreckt.

6. Düse nach Anspruch 5, wobei die Innenleitung (21) einen ersten röhrenförmigen Leitungsabschnitt (25a) umfasst, der ein Ende, das mit dem ersten Ende (21a) der Innenleitung zusammenfällt, und ein anderes Ende, an dem ein Anschlag (25c) angeordnet ist, umfasst, wobei das ringförmige Teilstück (61) im ersten Leitungsabschnitt (25a) und in Anschlag gegen den Anschlag (25c) in der Strömungsrichtung des Fluids aufgenommen ist.

7. Düse nach Anspruch 6, wobei die Anordnung des ringförmigen Teilstücks (61) gegen den Anschlag (25c) durch einen Kontakt zwischen einem oberen Ende (63a) des ringförmigen Teilstücks (61) und dem Anschlag (25c) ausgeführt ist, wobei der Kontakt umlaufend und dicht ist, wobei der umlaufende Kontakt zwischen dem umlaufenden Flächenabschnitt und der Innenfläche des Düsenkörpers (20) ebenfalls dicht ist, wobei der Anschlag (25c) vorteilhafterweise von einem umlaufenden Absatz der Innenfläche des Düsenkörpers (20) gebildet ist.

8. Düse nach Anspruch 7, wobei sich der umlaufende Flächenabschnitt (65) von einem unteren Ende des ringförmigen Teilstücks (61) und parallel zur Ausdehnungsachse des Düsenkörpers (20) erstreckt und auf einen ersten Anteil (62a1) der röhrenförmigen Außenfläche (62a) begrenzt ist, ein zweiter Anteil (62a2) der röhrenförmigen Außenfläche (62a), der an den ersten Anteil (62a1) angrenzt, von der Innenfläche des Düsenkörpers (20) entfernt ist, der zweite Anteil (62a2) der röhrenförmigen Außenfläche (62a) und der Innenflächenteilbereich des Düsenkörpers (20), der ihm gegenüber liegt, den umlaufenden Raum (66) bilden, der durch den umlaufenden Flächenabschnitt (65) einerseits und durch den umlaufenden dichten Kontakt zwischen dem oberen Ende (63a) und dem Anschlag (25c) in dichter Weise isoliert ist.

9. Düse nach Anspruch 8, wobei der Lüftungskanal (91) der radialen Lüftung (90) einen radialen Kanal umfasst, der ausgehend vom Reserveabschnitt (55b) ausgebildet ist, das Volumen der Speiche (64) radial durchquert und am umlaufenden Raum (66) mündet, und wobei die radiale Durchgangsbohrung (92) ebenfalls aus der Innenfläche des Düsenkörpers (20) am umlaufenden Raum (66) mündet.

10. Düse nach Anspruch 9, wobei der erste röhrenförmige Leitungsabschnitt (25a) einen Schrumpfabschnitt (25a1) umfasst, der sich vom Anschlag (25c) und in dichtem umlaufenden Kontakt mit einem Abschnitt des zweiten Anteils (62a2) der röhrenförmigen Fläche erstreckt.

11. Düse nach Anspruch 9 oder 10, wobei die Ventilführung (40) ebenfalls mit Zentrierflügeln (100) versehen ist, die sich radial an der Umfangsfläche (50a) der Hülse (50) und in Kontakt mit der Innenfläche des Düsenkörpers (20) erstrecken, wobei die Flügel vorteilhafterweise die mindestens eine Speiche (64) verlängern.

12. Düse nach Anspruch 11, wobei sich die Flügel über das dritte Ende (52a) der Hülse hinaus erstrecken und so an dem Sitz anliegen, dass sie jegliche Bewegung der Ventilführung (40) entlang der Ausdehnungsachse des Düsenkörpers (20) verhindern.

13. Düse nach einem der Ansprüche 1 bis 12 und in Kombination mit Anspruch 2, wobei der Ventilanschlag (54) von einem umlaufenden Absatz auf der Innenfläche der Hülse (50) gebildet ist.

14. Düse nach Anspruch 13, wobei der Gleitabschnitt (55a) der Hülse (50) einen Durchmesser über dem des Reserveabschnitts (55b) aufweist, um den umlaufenden Absatz zu bilden.

15. Düse nach Anspruch 13 oder 14, wobei die Positionierung des umlaufenden Absatzes so eingestellt ist, dass verhindert wird, dass die Druckfeder (80) aneinander liegende Windungen aufweist, wenn sich der Verschluss (70) in Anschlag gegen den Ventilanschlag (54) befindet.

16. Düse nach einem der Ansprüche 1 bis 15, wobei die Ventilführung (40) ein thermoplastisches Material umfasst.

17. Düse nach einem der Ansprüche 1 bis 16, wobei der Ventilsitz (30) an den Düsenkörper (20) gecrimpt ist.

18. Düse nach einem der Ansprüche 1 bis 17, wobei der Verschluss (70) ein Kolben ist, der ein Kolbenende, den Kolbenkopf, aufweist, das dazu bestimmt ist, die Öffnung (31) des Ventilsitzes (30) zu verschließen, mit einer zur Öffnung (31) passenden Form, der Kolbenkopf vorteilhafterweise eine Abschrägung umfasst.

19. Hydraulik- oder Pneumatikkreis umfassend mindestens eine Düse (10) nach einem der Ansprüche 1 bis 18, wobei der Hydraulik- oder Pneumatikkreis vorteilhafterweise jener eines Verbrennungsmotors ist.

## Claims

1. Axial spray nozzle (10) with vented valve, comprising:
- a spray nozzle body (20) comprising an internal conduit (21), extending along an elongation axis (XX'), said conduit (21) having a symmetry of revolution about the elongation axis (XX'), comprising a first end (21a) and a second end (21b), and being defined by an internal surface of the spray nozzle body (20),
- a valve seat (30) located at the first end (21a) of the internal conduit (21), comprising a port (31) forming a fluid inlet (22) to the spray nozzle,
- a valve guide (40) comprising a tubular sleeve (50) and a retaining element (60), the sleeve (50) forming a channel (51), open at a third end (52a), and closed by a bottom (53) at a fourth end (52b), the retaining element (60) holding the sleeve (50) in the internal conduit (21) and coaxially with said conduit, the third end (52a) facing and being set back from the port (31) in the valve seat (30), the sleeve (50) leaving a space (24) between its peripheral surface (50a) and the internal surface of the spray nozzle body (20) so as to enable fluid flow along a fluid flow direction, between the fluid inlet and a fluid outlet (22b),
- a plug (70) mounted free to slide axially in the channel (51) of the sleeve (50), the plug (70) being pushed into contact with the port (31) in the valve seat (30) by a compression spring (80), housed in the sleeve (50) and stopped in contact with the bottom (53) of the sleeve (50), so as to close off the port (31) in the valve seat (30), **Characterized in that** the second end (21b) of the internal conduit (21) forms the fluid outlet (22b), and **in that** the valve guide (40) comprises a radial vent (90), that comprises a vent channel (91) isolated from the fluid flow in a leak tight manner, connecting the inside of the tubular guide sleeve (50) at the reserve section (55b), to a through radial drilling (92) formed in the spray nozzle body (20).

2. Spray nozzle according to claim 1, wherein a circumferential space (66) is formed between an external tubular surface(62a) of the retaining element (60) and the internal surface of the internal conduit (21), the circumferential space (66) being isolated from the fluid flow in a leak tight manner, and creating a communication between the vent channel (91) and the through radial drilling (92).

3. Spray nozzle according to one of claims 1 and 2, wherein axial sliding of the plug (70) is limited by a valve stop (54) at a sliding section (55a) of the sleeve (50) opening up on the third end (52a) of the sleeve (50), and adjacent to a reserve section (55b) of the sleeve (50) terminating by the bottom (53) of the sleeve (50), the vent channel (91) advantageously opening up in the channel (51) of the sleeve (50) at the reserve section (55b).

4. Spray nozzle according to one of claims 1 to 3, in combination with claim 2, wherein the retaining element (60) comprises an annular segment (61) mechanically connected to the sleeve (50), in which the sleeve (50) is coaxially engaged, the coaxial engagement of the sleeve (50) in the annular segment (61) forming a sliding space between said segment (61) and said sleeve (50), the external tubular surface (62a) comprising at least one circumferential surface section (66) in circumferential contact with the internal surface of the spray nozzle body (20).

5. Spray nozzle according to claim 4, wherein the mechanical connection between the annular segment (61) and the sleeve (50) comprises at least one spoke (64) extending radially between the peripheral surface (50a) and an internal tubular surface (62b) of the annular segment (61).

6. Spray nozzle according to claim 5, wherein the internal conduit (21) comprises a first tubular conduit section (25a) comprising one end coincident with the first end (21a) of the internal conduit and another end at where there is a stop (25c), the annular segment (6) being housed in the first conduit section (25a) and stopped in contact with said stop (25c) in the fluid flow direction.

7. Spray nozzle according to claim 6, wherein the arrangement of the annular segment (61) blocked against the stop (25c) is made by a contact between an upper end (63a) of the annular segment (61) and the stop (25c), said contact being circumferential and leak tight, the circumferential contact between the circumferential surface section and the internal surface of the spray nozzle body (20) also being leak tight, the stop (25c) advantageously being formed by a circumferential shoulder of the internal surface of the spray nozzle body (20).

8. Spray nozzle according to claim 7, wherein the circumferential surface section (65) extends from a lower end of the annular segment (61) parallel to the elongation axis of the spray nozzle body (20), and is limited to a first fraction (62a1) of the external tubular surface (62a), a second fraction (62a2) of the external tubular surface (62a) adjacent to said first fraction (62a1) is at a distance from the internal surface of the spray nozzle body (20), the second fraction (62a2) of the external tubular surface (62a) and the portion of internal surface of the spray nozzle body (20) facing it form the circumferential space (66) which is leak tight isolated firstly by the circumferential surface section (65) and by the leak tight circumferential contact between the upper end (63a) and the stop (25c).

9. Spray nozzle according to claim 8, wherein the vent channel (91) of the radial vent (90) comprises a radial channel formed from the reserve section (55b) passing radially through the volume of the spoke (64), and opening up in the circumferential space (66), and in which the through radial drilling (92) also opens up from the internal surface of the spray nozzle body (20) in the circumferential space (66).

10. Spray nozzle according to claim 9, wherein the first tubular conduit section (25a) comprises a narrowed section (25a1) extending from the stop (25c), and in circumferential leak tight contact with a section of the second fraction (62a2) of the tubular surface.

11. Spray nozzle according to claim 9 or 10, wherein the valve guide (40) is also fitted with centring fins (100) extending radially to the peripheral surface (50a) of the sleeve (50), and in contact with the internal surface of the spray nozzle body (20), the fins advantageously prolonging the at least one spoke (64).

12. Spray nozzle according to claim 11, wherein the fins extend beyond the first end (52a) of the sleeve and bear in contact with the seat so as to prevent any displacement of the valve guide (40) along the elongation axis of the spray nozzle body (20).

13. Spray nozzle according to one of claims 1 to 12 in combination with claim 2, wherein the valve stop (54) is formed by a circumferential shoulder on the internal surface of the sleeve (50).

14. Spray nozzle according to claim 13, wherein the diameter of the sliding section (55a) of the sleeve (50) is larger than the diameter of the reserve section (55b) so as to form the circumferential shoulder.

15. Spray nozzle according to claim 13 or 14, wherein the position of the circumferential shoulder is adjusted so as to prevent the compression spring (80) from having adjacent turns when the plug (70) is stopped in contact with the valve stop (54).

16. Spray nozzle according to one of claims 13 to 15, wherein the valve guide (40) comprises a thermoplastic material.

17. Spray nozzle according to one of claims 1 to 16, wherein the valve seat (30) is crimped to the spray nozzle body (20).

18. Spray nozzle according to one of claims 1 to 17, wherein the plug (70) is a piston that has a piston end called the piston head, that will block the port (31) in the valve seat (30) and has a shape complementary to said port (31), advantageously the piston head is chamfered.

19. Hydraulic or pneumatic circuit comprising at least one spray nozzle (10) according to one of claims 1 to 18, advantageously the hydraulic or pneumatic circuit being part of an internal combustion engine.
